# EUROPÄISCHE PATENTSCHRIFT

(11) **EP 2 082 904 B1**
(45) Veröffentlichungstag und Bekanntmachung des Hinweises auf die Patenterteilung: **05.01.2011**
(21) Anmeldenummer: 08020597.4
(22) Anmeldetag: 27.11.2008
(51) Int. Cl.: B60G 15/06, B60G 17/02

(54) **Federbein mit verstellbarem Federteller**
Suspension strut with adjustable spring disc
Jambe de force dotée d'une coupelle de ressort réglable

(30) Priorität: 25.01.2008 DE 102008006087
(43) Veröffentlichungstag der Anmeldung: 29.07.2009
(73) Patentinhaber: ThyssenKrupp Bilstein Suspension GmbH, 58256 Ennepetal (DE)
(72) Erfinder: Fritz, Michael, Dipl.-Ing., 58339 Breckerfeld (DE)
(74) Vertreter: Adams, Steffen

(56) Entgegenhaltungen:
- EP-A- 1 258 374
- EP-A- 1 985 475
- DE-A1-102007 015 888
- US-A- 5 263 695

## Beschreibung

Die Erfindung betrifft ein Federbein mit den Merkmalen des Oberbegriffs des Patentanspruchs 1.

Ein gattungsgemäßes Federbein ist aus der DE 26 56 707 A1 bekannt. In der Beschreibungseinleitung der DE 26 56 707 A1 wird das Problem dargelegt, dass aufgrund des reichhaltigen Angebotes an Sonderausstattungen der Kraftfahrzeuge das Leergewicht eines bestimmten Fahrzeugtyps je nach Ausstattungsvariante stark schwankt. Wenn keine geeigneten Gegenmaßnahmen getroffen werden, führt diese Schwankung des Leergewichts zu unterschiedlichen Standhöhen der Fahrzeuge, da die Fahrzeugfeder des Federbeins bei den unterschiedlichen Leergewichten unterschiedlich stark zusammengedrückt wird. Unter Standhöhe des Fahrzeugs ist dabei der im Ruhezustand vorliegende Abstand des Fahrzeugaufbaus von dem Boden zu verstehen, auf dem das Fahrzeug steht.

Eine aus der Praxis bekannte Gegenmaßnahme, mit der auch bei unterschiedlichen Leergewichten eines bestimmten Fahrzeugtyps immer die gleiche Standhöhe des Fahrzeugaufbaus gegenüber der Fahrbahnoberfläche erreicht wird besteht darin, hinsichtlich ihrer Länge und/oder ihrer sonstigen Kennwerte (z.B. Federsteifigkeit) unterschiedliche Schraubenfedern einzusetzen. Durch den Einsatz unterschiedlicher Schraubenfedern kann trotz unterschiedlicher Fahrzeuggewichte immer die gleiche Standhöhe gewährleistet werden. Dies erfordert jedoch eine umfangreiche Lagerhaltung für die unterschiedlichen Fahrzeugfedern. Darüber hinaus besteht die Gefahr von Verwechslungen, so dass sich für ein gegebenes Fahrzeug mit einem gegebenen Leergewicht eine falsche Standhöhe eingestellt, wenn nicht die passende Fahrzeugfeder eingebaut wird.

Um die vorstehend genannten Nachteile zu vermeiden, wird gemäß DE 26 56 707 A1 vorgeschlagen, dass der Federteller am Stoßdämpferaußenrohr lösbar und axial parallel zu der Längsachse des Außenrohres verschiebbar befestigt ist. Auf diese Weise kann die Länge der Fahrzeugfeder durch Verschieben des Federtellers verändert und an das Leergewicht des Fahrzeugs angepasst werden. Durch das axiale Verschieben des Federtellers in Richtung Längsachse des Außenrohres wird somit die Federlänge derart angepasst, dass die Fahrzeuge eines Fahrzeugtyps mit unterschiedlichen Leergewichten immer dieselbe Standhöhe aufweisen.

Die aus der DE 26 56 707 A1 bekannte Lösungsmaßnahme hat den Nachteil, dass dann, wenn die Kraftwirkungslinie der Schraubenfeder von der Längsachse des Stoßdämpferrohres abweicht und mit dieser einen spitzen Winkel einschließt, die axiale Verschiebung des Federtellers dazu führt, dass sich die von der Schraubenfeder auf die Kolbenstange des Schwingungsdämpfers übertragene Querkraft unkontrolliert verändert. Denn bei Federbeinen ist die Schraubenfeder oft über einen an der Kolbenstange des Schwingungsdämpfers befestigten zweiten Federteller abgestützt, über den eine Federkraft auf die Kolbenstange in Querrichtung einwirkt. Diese auf die Kolbenstange einwirkende Querkraft kann durch die axiale Verschiebung des Federtellers in Richtung Längsachse des Stoßdämpferrohres unerwünscht hohe Werte erreichen, so dass eine unakzeptabel hohe Reibung zwischen der Kolbenstange und dem das Stoßdämpferrohr verschließenden und die Kolbenstange führenden Dichtungs- und Führungspaket vorliegt.

Der Erfindung liegt die Aufgabe zugrunde, ein Federbein mit den Merkmalen des Oberbegriffs des Patentanspruchs 1 derart weiterzubilden, dass die Standhöhe von Fahrzeugen mit unterschiedlichem Leergewicht durch eine Verstellung des Federtellers stets gleich eingestellt werden kann, so dass die Reibung zwischen Kolbenstange und Dichtungs- und Führungspaket annähernd konstant bleibt und sich nicht über einen bauteilspezifischen Wert hinaus erhöht.

Diese Aufgabe wird gelöst durch ein Federbein mit den Merkmalen des Patentanspruchs 1. Vorteilhafte Weiterbildungen sind in den Unteransprüchen angegeben. Die vorliegende Erfindung ist insbesondere vorteilhaft bei sogenannten radführenden Federbeinen (McPherson Federbeinen) einsetzbar. Bei diesen Federbeinen weicht die Kraftwirkungslinie der als Schraubenfeder ausgebildeten Fahrzeugtragfeder in der Einbausituation häufig von der Längsachse des Schwingungsdämpfers ab und schließt mit dieser einen spitzen Winkel ein. Der Erfindung liegt die Erkenntnis zugrunde, dass es dann nicht zu einer unerwünschten Veränderung der von der Schraubenfeder auf die Kolbenstange des Schwingungsdämpfers übertragenen Querkraft und damit nicht zu einer unerwünschten Reibungserhöhung zwischen Kolbenstange und Dichtungs- und Führungspaket kommt, wenn der Federteller in Richtung der Kraftwirkungslinie der Schraubenfeder verschoben wird. Obwohl durch das Verschieben des Federtellers entlang der Kraftwirkungslinie der Schraubenfeder eine Einstellung der Federlänge und damit eine gezielte Beeinflussung der Standhöhe des Fahrzeugaufbaus erreicht wird, verändert sich die von der Schraubenfeder auf die Kolbenstange des Schwingungsdämpfers übertragene Querkraft nicht und die Reibung zwischen Kolbenstange und Dichtungs- und Führungspaket bleibt im Wesentlichen konstant. Auf diese Weise ist die von der Schraubenfeder auf die Kolbenstange des Schwingungsdämpfers übertragene Querkraft bei allen Varianten eines Fahrzeugtyps mit unterschiedlichen Leergewichten stets die gleiche, so dass auch die Reibung der Kolbenstange in dem das Stoßdämpferrohr verschließenden Dichtungs- und Führungspaket im Wesentlichen immer gleich groß ist.

Nach einer bevorzugten Ausführungsform der Erfindung ist eine hohlzylindrische Hülse am Außenrohr des Schwingungsdämpfers angeordnet, an der sich der Federteller abstützt. Wenn die Mittellinie der Hülse einen spitzen Winkel mit der Längsachse des Außenrohres einschließt, kann der Außenmantel der Hülse als Führungsfläche für die Verschiebung des Federtellers genutzt werden. Auf diese Weise wird eine kontrollierte und geführte Verschiebung des Federtellers auf einfache Weise gewährleistet, wobei die Richtung der Verschiebung von der Längsachse des Außenrohres abweicht.

Um die relative Position des Federtellers zu der Hülse zu variieren, ist es vorteilhaft, wenn zwischen den Federteller und die Hülse Distanzscheiben eingebracht werden. Über die Distanzscheiben kann die relative Position des Federtellers zu der Hülse wie gewünscht eingestellt werden. Damit sich der Federteller über die Distanzscheiben an der Hülse abstützen kann, weist die Hülse vorteilhaft einen Stützkragen auf, an dem sich die Distanzscheiben abstützen.

Die Distanzscheiben und/oder der Federteller können zum Dämpferrohr verdrehsicher positioniert werden. Dies ist vor allem bei McPherson Federbeinen notwendig.

Nach einer besonders vorteilhaften Ausführungsform der Erfindung ist die Hülse relativ zum Außenrohr schräg angeordnet, so dass das Außenrohr die mit ihrer Mittellinie schräg zur Längsachse des Außenrohres angeordnete Hülse teilweise derart durchdringt, dass die Hülse Ausnehmungen aufweist, die das Außenrohr aufnehmen. Diese Ausnehmungen können vorteilhaft durch eine Durchdringungskurve begrenzt sein, die an den Mantel des Außenrohres angepasst ist.

Um die Hülse fest mit dem Außenrohr zu verbinden, ist es nach einer Ausgestaltung der Erfindung vorgesehen, dass die Hülse entlang des Randes mindestens einer der Ausnehmungen zumindest abschnittsweise mit dem Außenrohr verbunden ist. Die Verbindung zwischen Hülse und Außenrohr kann dabei vorteilhaft als stoffschlüssige Verbindung, insbesondere als Schweiß-, Löt- oder Klebeverbindung ausgebildet sein. Alternativ kann die Verbindung auch als Steck- oder Klemmverbindung ausgebildet sein.

Im Folgenden wird die Erfindung anhand einer ein Ausführungsbeispiel darstellenden Zeichnung näher erläutert. Im Einzelnen zeigen
- Fig. 1:: Ein erfindungsgemäßes Federbein im axialen Halbschnitt, mit einer ersten Möglichkeit zur Einstellung der Relativposition des Federtellers zu der Hülse;
- Fig. 2:: Ein Federbein gemäß Fig. 1 mit einer zweiten Möglichkeit zur Einstellung der Relativposition des Federtellers zu der Hülse;
- Fig. 3:: Eine gegenüber den Fig. 1 und 2 abgewandelte Ausführungsform des er- findungsgemäßen Federbeins;
- Fig. 4:: Eine Einzeldarstellung der Hülse für die Ausführungsform gemäß Fig. 3.

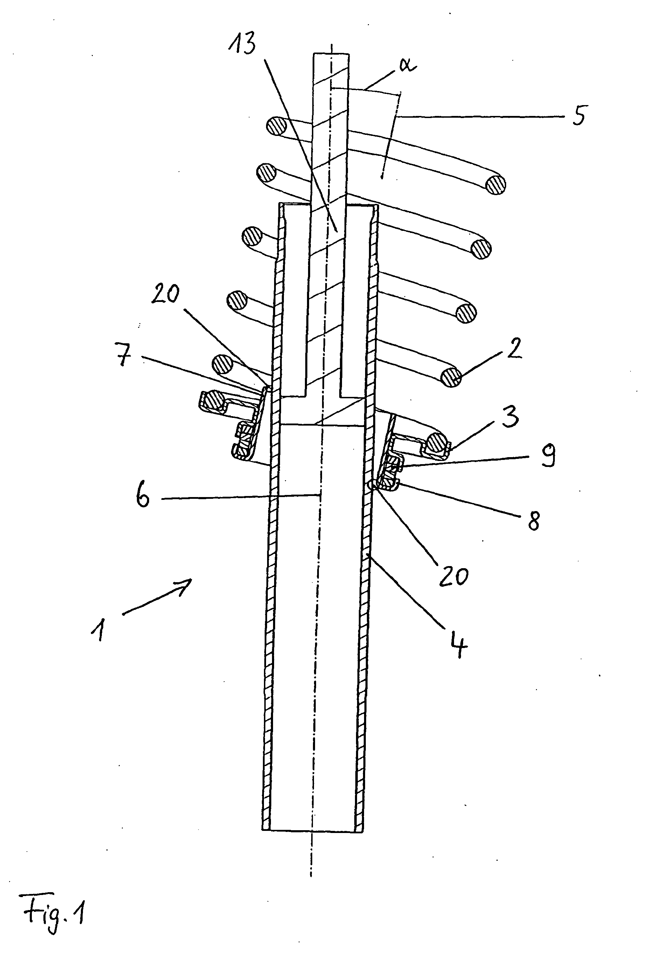

In Figur 1 ist ein Federbein für Kraftfahrzeuge mit einem Schwingungsdämpfer 1 und einer den Schwingungsdämpfer teilweise umgebenden Schraubenfeder 2 dargestellt, wobei sich die Schraubenfeder über einen Federteller 3 an einem Außenrohr 4 des Schwingungsdämpfers 1 abstützt. Die Schraubenfeder 2 weist eine Kraftwirkungslinie 5 auf, die mit der Längsachse 6 des Schwingungsdämpfers 1 einen spitzen Winkel α einschließt.

Der Federteller 3 ist relativ zum Außenrohr 4 verstellbar angeordnet. Bei dem in Figur 1 dargestellten Ausführungsbeispiel erfolgt die Verstellung des Federtellers 3 relativ zum Außenrohr 4 durch das Einbringen von Distanzscheiben 9 zwischen den Federteller 3 und die Hülse 7. Durch das Einbringen von Distanzscheiben 9, die sich auf einem Stützkragen 8 der Hülse 7 abstützen, wird der Federteller 3 entlang der Kraftwirkungslinie 5 der Schraubenfeder 2 verschoben. Auf diese Weise wird die Länge der Schraubenfeder 2 eingestellt, ohne dass die Position der Kraftwirkungslinie 5 der Feder 2 gegenüber dem Schwingungsdämpfer 1 verändert wird. Die von der Schraubenfeder 2 auf die Kolbenstange 13 des Schwingungsdämpfers 1 übertragene Querkraft bleibt daher für alle Federlängen gleich groß, so dass sich auch die Reibung zwischen der Kolbenstange 13 und dem nicht dargestellten Dichtungs- und Führungspaket nicht verändert, insbesondere nicht erhöht.

Um die Hülse 7 fest mit dem Außenrohr 4 des Schwingungsdämpfers 1 zu verbinden, ist eine stoffflüssige Verbindung in Form einer Schweißnaht 20 vorgesehen. Anstelle einer Schweißnaht 20 könnte auch eine Lötverbindung oder eine Klebeverbindung vorgesehen sein.

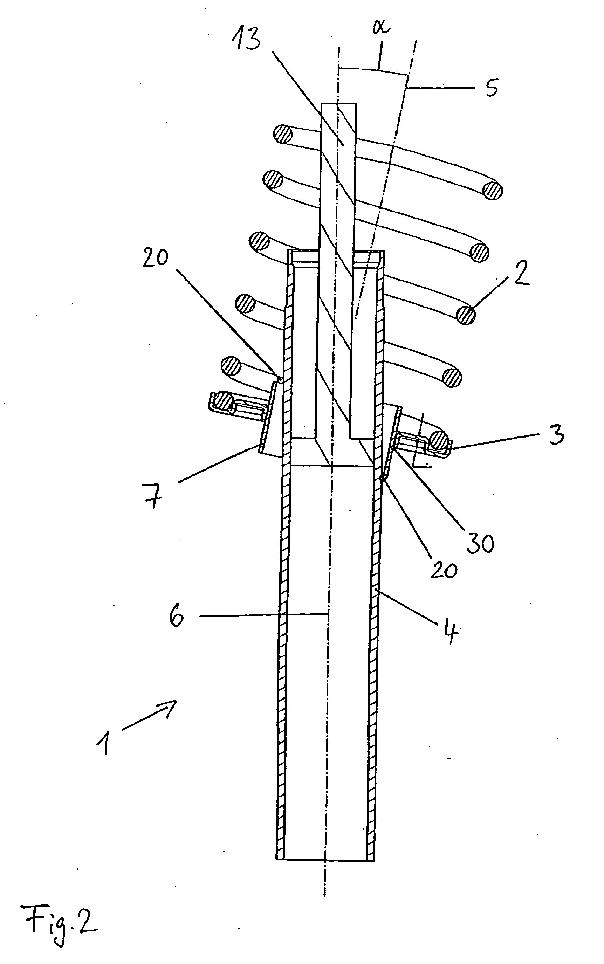

In Fig. 2 ist eine andere Ausführungsform der Erfindung dargestellt, wobei gleiche Bauteile mit denselben Bezugszeichen bezeichnet sind wie in Fig. 1. Bei dieser Ausführungsform der Erfindung erfolgt die Festlegung der Relativposition des Federtellers 3 zur Hülse 7 dadurch, dass der Federteller 3 in der gewünschten Position mit dem Außenmantel der Hülse 7 über eine Schweißverbindung 30 verschweißt wird. Nach der Verschweißung des Federtellers 3 mit der Hülse 7 ist der Federteller 3 nicht mehr verschiebbar. Bei dieser Ausführungsform der Erfindung wird somit in der Konstruktionslage die Fahrzeugfeder durch entsprechende Positionierung des Federtellers 3 auf ihre der gewünschten Standhöhe des Fahrzeuges entsprechende Länge gebracht und der Federteller 3 wird dann relativ zur Hülse 7 durch die Schweißung 30 festgelegt. Auch bei diesem Ausführungsbeispiel kann die Hülse 7 mit dem Außenrohr 4 des Schwingungsdämpfers über eine stoffschlüssige Verbindung wie z.B. eine Schweißverbindung 20 verbunden sein.

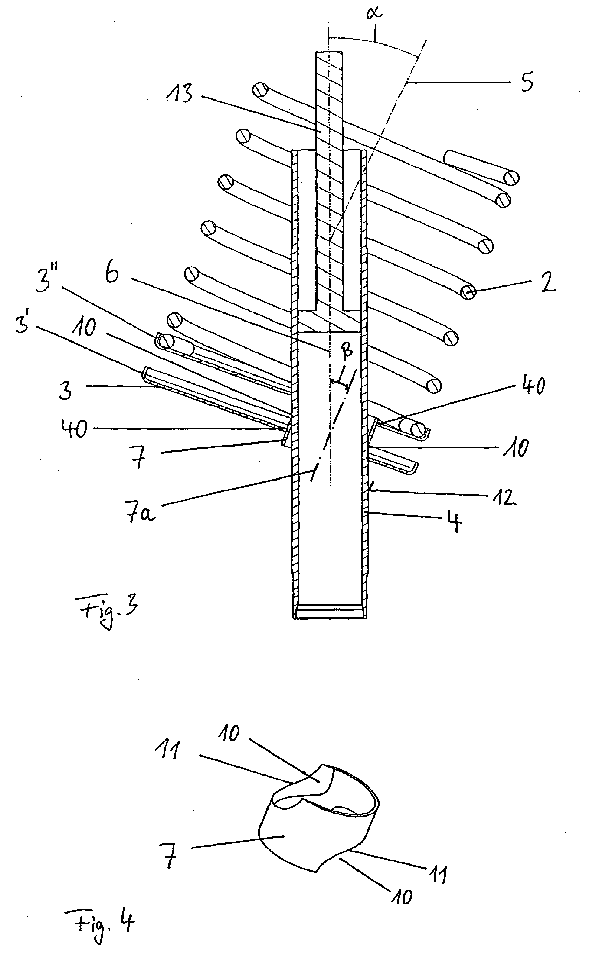

In Fig. 3 ist eine gegenüber den Fig. 1 und 2 abgewandelte Ausführungsform der Erfindung dargestellt. Bei dieser Ausführungsform der Erfindung ist die Hülse 7 ebenfalls schräg zum Außenrohr 4 angeordnet, wobei das Außenrohr 4 die mit ihrer Mittellinie 7a schräg zur Längsachse 6 des Außenrohres 4 angeordnete Hülse 7 teilweise derart durchdringt, dass die Hülse 7 Ausnehmungen 10 aufweist, die das Außenrohr 4 aufnehmen. Die Ausnehmungen 10 sind durch eine Durchdringungskurve 11 (vgl. Fig. 4) begrenzt, die an den Mantel 12 des Außenrohres angepasst ist. Die Hülse 7 ist entlang des Randes der beiden Ausnehmungen 10 mit dem Außenrohr 4 durch nicht dargestellte Schweiß-, Löt- oder Klebeverbindungen zumindest abschnittsweise verbunden. Es kann jedoch auch ausreichend sein, die Hülse 7 lediglich entlang eines der Ränder einer der Ausnehmungen 10 mit dem Außenrohr 4 zu verbinden.

Bei dem in Fig. 3 dargestellten Ausführungsbeispiel schließt die Mittellinie 7a der Hülse 7 mit der Längsachse 6 des Außenrohres 4 des Schwingungsdämpfers 1 einen spitzen Winkel β ein. Der Außenmantel der Hülse 7 bildet eine Führungsfläche für die Verschiebung des Federtellers 3. In Fig. 3 sind zwei unterschiedliche Positionen einund desselben Federtellers 3 dargestellt. Damit der Federteller 3 von einer unteren Position 3' relativ zur Hülse 7 in eine obere Position 3" verschoben werden kann, weist der Federteller 3 in dem Bereich, in dem das Außenrohr 4 des Schwingungsdämpfers 1 die Hülse 7 durchdringt, Ausnehmungen 40 auf. Diese Ausnehmungen 40 ermöglichen eine Verschiebung des Federtellers 3 entlang des gesamten Außenmantels der Hülse 7. Im dargestellten Ausführungsbeispiel der Fig. 3 ist die Mittellinie 7a der Hülse 7 in etwa parallel zu der Kraftwirkungslinie 5 der Schraubenfeder 2, wobei jedoch darauf hinzuweisen ist, dass dies nicht zwangsläufig so sein muss.

Der Federteller 3 ist mit der Hülse 7 durch eine Schweißverbindung verbunden, die in Fig. 3 aus Gründen einer besseren Übersichtlichkeit nicht dargestellt ist. Alternativ oder zusätzlich kann der Federteller 3 auch durch Löt- oder Klebeverbindungen an der Hülse 7 befestigt sein. Auch ist es möglich, die Hülse 7 mit einem Außengewinde und den Innendurchmesser des Federtellers 3 mit einem Innengewinde zu versehen, damit die Position des Federtellers 3 auf der Hülse 7 durch eine Schraubverdrehung verändert und der Federteller 3 auf der Hülse 7 z.B. mittels einer Kontermutter als Verdrehsicherung festgelegt werden kann.

In Fig. 4 ist zur besseren Verdeutlichung die Hülse 7 gemäß dem Ausführungsbeispiel der Fig. 3 als Einzelteil dargestellt. Die durch die Durchdringungskurven 11 begrenzten Ausnehmungen 10 sind gut zu erkennen. Mit ihren Durchdringungskurven 11 liegt die Hülse 7 bei der Montage an dem Außenrohr 4 des Schwingungsdämpfers an, so dass sich die winklige Positionierung der Hülse 7 zu dem Außenrohr 4 ergibt und eine Fixierung der Hülse 7 auf dem Außenrohr 4 z.B. durch eine Schweißverbindung erzeugt werden kann.

Allen Ausführungsformen der vorliegenden Erfindung ist gemein, dass sie sehr flexibel bei unterschiedlichsten Federbeinen und somit in unterschiedlichsten Einbausituationen eingesetzt werden können. Während bei den in den Fig. 1 und 2 dargestellten Ausführungsbeispielen der spitze Winkel α zwischen der Kraftwirkungslinie 5 der Schraubenfeder 2 und der Längsachse 6 des Schwingungsdämpfers 1 etwa 11° beträgt, weist dieser Winkel bei dem in Fig. 3 dargestellten Ausführungsbeispiel einen Wert von etwa 23° auf. Der spitze Winkel β (vgl. Fig. 3), den die Mittellinie 7a der Hülse 7 mit der Längsachse 6 des Außenrohres 4 einschließt, kann mit dem spitzen Winkel α übereinstimmen. In diesem Fall wird durch eine Verschiebung des Federtellers 3 keine Veränderung der auf die Kolbenstange einwirkenden Querkraft und damit keine Veränderung der Reibung bewirkt. Der Fachmann wird daher bestrebt sein, den Winkel β so zu wählen, dass er dem Winkel α entspricht.

Es ist jedoch denkbar, dass es aus konstruktiven Gründen in einer konkreten Einbausituation für das Federbein in einem Fahrzeugfahrwerk nicht möglich ist, den Winkel β genauso groß zu wählen wie der Winkel α ist. In diesem Fall wird der Fachmann bestrebt sein den Winkel β so zu wählen, dass er möglichst nahe an den Winkel α herankommt. Dadurch, dass die beiden Winkel sich in diesem Fall voneinander unterscheiden, wird bei einer Verschiebung des Federtellers 3 entlang der Mittellinie 7a der Hülse 7 eine gewisse Veränderung der auf die Kolbenstange einwirkenden Querkraft bewirkt und muss in Kauf genommen werden. Übersteigt diese Veränderung der Querkraft eine von dem Konstrukteur zu definierende Zulässigkeitsgrenze nicht, so müssen keine weiteren Maßnahmen ergriffen werden. Falls die Beeinflussung der Querkraft jedoch eine definierte Zulässigkeitsgrenze überschreitet, so kann der Konstrukteur noch zusätzliche Maßnahmen ergreifen, um die unerwünschte Querkraftveränderung zu kompensieren. Derartige Maßnahmen können z.B. darin bestehen, den unteren Federteller 3 und/oder den oberen Federteller relativ zu der Kraftwirkungslinie 5 der Schraubenfeder 2 derart winklig anzustellen, dass eine Kompensation der durch die Federtellerverschiebung bewirkten Querkraftveränderung erreicht wird. Wichtig ist, dass auch in diesem Fall, wenn also der Winkel β nicht genau gleich groß ist wie der Winkel α, von der Lehre der vorliegenden Erfindung Gebrauch gemacht wird, denn es erfolgt auch in diesem Fall eine Verschiebung des Federtellers 3 im Wesentlichen in Richtung der Kraftwirkungslinie 5 der Schraubenfeder 2. Durch den Begriff "im Wesentlichen" wird dabei zum Ausdruck gebracht, dass von der Lehre der vorliegenden Erfindung auch solche Fälle umfasst sind, in denen die Verschiebung des Federtellers 3 nicht geometrisch exakt ausschließlich in Richtung der Kraftwirkungslinie 5 der Schraubenfeder 2 erfolgt.

## Patentansprüche

1. Federbein für Radaufhängungen von Fahrzeugen, mit einem Schwingungsdämpfer (1) und einer den Schwingungsdämpfer (1) teilweise umgebenden Schraubenfeder (2), wobei sich die Schraubenfeder (2) über einen Federteller (3) an einem Außenrohr (4) des Schwingungsdämpfers (1) abstützt und der Federteller (3) relativ zum Außenrohr (4) zur Einstellung der Federlänge verstellbar ist, **dadurch gekennzeichnet, dass** die Kraftwirkungslinie (5) der Schraubenfeder (2) mit der Längsachse (6) des Schwingungsdämpfers (1) einen spitzen Winkel (α) einschließt und die Position des Federtellers (3) im Wesentlichen in Richtung der Kraftwirkungslinie (5) einstellbar ist.

2. Federbein nach Anspruch 1, **dadurch gekennzeichnet, dass** eine hohlzylindrische Hülse (7) am Außenrohr (4) des Schwingungsdämpfers (1) angeordnet ist, an der sich der Federteller (3) abstützt.

3. Federbein nach Anspruch 2, **dadurch gekennzeichnet, dass** die Mittellinie (7a) der Hülse (7) einen spitzen Winkel (β) mit der Längsachse (6) des Außenrohres (4) einschließt.

4. Federbein nach einem der Ansprüche 1 bis 3, **dadurch gekennzeichnet, dass** der Federteller (3) im Wesentlichen in Richtung der Kraftwirkungslinie (5) verschiebbar angeordnet ist.

5. Federbein nach Anspruch 4, **dadurch gekennzeichnet, dass** der Außenmantel der Hülse (7) eine Führungsfläche für die Verschiebung des Federtellers (3) bildet.

6. Federbein nach einem der Ansprüche 2 bis 5, **dadurch gekennzeichnet, dass** die Hülse (7) einen Stützkragen (8) aufweist, an dem sich Distanzscheiben (9) abstützen, und dass über die Distanzscheiben (9) die Relativposition des Federtellers (3) zu der Hülse (7) einstellbar ist.

7. Federbein nach einem der Ansprüche 3 bis 6, **dadurch gekennzeichnet, dass** das Außenrohr (4) die mit ihrer Mittellinie (7a) schräg zur Längsachse (6) des Außenrohres (4) angeordnete Hülse (7) teilweise durchdringt, so dass die Hülse (7) Ausnehmungen (10) aufweist, die das Außenrohr (4) aufnehmen.

8. Federbein nach Anspruch 7, **dadurch gekennzeichnet, dass** die Ausnehmungen (10) durch eine Durchdringungskurve (11) begrenzt sind, die an den Mantel (12) des Außenrohres (4) angepasst ist.

9. Federbein nach Anspruch 7 oder 8, **dadurch gekennzeichnet, dass** die Hülse (7) entlang des Randes mindestens einer der Ausnehmungen (10) zumindest abschnittsweise mit dem Außenrohr (4) verbunden ist.

10. Federbein nach Anspruch 9, **dadurch gekennzeichnet, dass** die Verbindung eine Schweiß-, Löt- oder Klebeverbindung oder eine Steck- oder Klemmverbindung ist.

## Claims

1. Spring strut for wheel suspensions of vehicles, having a vibration damper (1) and a helical spring (2) which partially surrounds the vibration damper (1), wherein the helical spring (2) is supported via a spring plate (3) on an outer pipe (4) of the vibration damper (1) and the spring plate (3) can be adjusted relative to the outer pipe (4) for the purpose of adjusting the spring length, **characterised in that** the line of application of force (5) of the helical spring (2) forms an acute angle (α) with the longitudinal axis (6) of the vibration damper (1), and the position of the spring plate (3) can be adjusted substantially in the direction of the line of action of force (5).

2. Spring strut as claimed in claim 1, **characterised in that** a hollow-cylindrical sleeve (7) is disposed on the outer pipe (4) of the vibration damper (1), the spring plate (3) being supported on said sleeve.

3. Spring strut as claimed in claim 2, **characterised in that** the centre line (7a) of the sleeve (7) forms an acute angle (β) with the longitudinal axis (6) of the outer pipe (4).

4. Spring strut as claimed in any one of claims 1 to 3, **characterised in that** the spring plate (3) is disposed so as to be displaceable substantially in the direction of the line of action of force (5).

5. Spring strut as claimed in claim 4, **characterised in that** the outer periphery of the sleeve (7) forms a guide surface for the displacement of the spring plate (3).

6. Spring strut as claimed in any one of claims 2 to 5, **characterised in that** the sleeve (7) has a support collar (8), on which spacer disks (9) are supported, and that the relative position of the spring plate (3) to the sleeve (7) can be adjusted by means of the spacer disks (9).

7. Spring strut as claimed in any one of claims 3 to 6, **characterised in that** the outer pipe (4) partially penetrates the sleeve (7) which is disposed with its centre line (7a) in an inclined manner with respect to the longitudinal axis (6) of the outer pipe (4), so that the sleeve (7) comprises recesses (10) which receive the outer pipe (4).

8. Spring strut as claimed in claim 7, **characterised in that** the recesses (10) are defined by a penetration curve (11) which is adapted to the periphery (12) of the outer pipe (4).

9. Spring strut as claimed in claim 7 or 8, **characterised in that** at least portions of the sleeve (7) are connected to the outer pipe (4) along the edge of at least one of the recesses (10).

10. Spring strut as claimed in claim 9, **characterised in that** the connection is a welding, soldering or adhesive connection or a plug-in or clamping connection.

## Revendications

1. Jambe de force à ressort pour des suspensions de roues de véhicules automobiles, dotée d'un amortisseur de vibrations (1) et d'un ressort hélicoïdal (2), qui entoure partiellement l'amortisseur de vibrations (1), le ressort hélicoïdal (2) prenant appui sur un tube extérieur (4) de l'amortisseur de vibrations (1) par l'intermédiaire d'une coupelle de ressort (3), et la coupelle de ressort (3) pouvant être déplacée par rapport au tube extérieur (4) pour le réglage de la longueur du ressort, **caractérisée en ce que** la ligne de force (5) du ressort hélicoïdal (2) forme avec l'axe longitudinal (6) de l'amortisseur de vibrations (1) un angle aigu (α) et que la position de la coupelle de ressort (3) peut être réglée essentiellement dans la direction de la ligne de force (5).

2. Jambe de force à ressort selon la revendication 1, **caractérisée en ce que**, sur le tube extérieur (4) de l'amortisseur de vibrations (1), est disposée une douille (7) en forme de cylindre creux, sur laquelle la coupelle de ressort (3) prend appui.

3. Jambe de force à ressort selon la revendication 2, **caractérisée en ce que** la ligne médiane (7a) de la douille (7) forme un angle aigu (β) avec l'axe longitudinal (6) du tube extérieur (4).

4. Jambe de force à ressort selon l'une des revendications 1 à 3, **caractérisée en ce que** la coupelle de ressort (3) peut être déplacée essentiellement dans la direction de la ligne de force (5).

5. Jambe de force à ressort selon la revendication 4, **caractérisée en ce que** la douille (7) forme une surface de guidage pour le déplacement de la coupelle de ressort (3).

6. Jambe de force à ressort selon l'une des revendications 2 à 5, **caractérisée en ce que** la douille (7) présente une collerette de support (8), sur laquelle des écarteurs (9) prennent appui, et **en ce que** la position de la coupelle de ressort (3) peut être ajustée au moyen des écarteurs (9) par rapport à la douille (7).

7. Jambe de force à ressort selon l'une des revendications 3 à 6, **caractérisée en ce que** le tube extérieur (4) traverse, au moins partiellement, la douille (7), dont la ligne médiane (7a) est disposée obliquement par rapport à l'axe longitudinal (6) du tube extérieur (4), ladite douille (7) présentant des évidements (10), qui reçoivent le tube extérieur (4).

8. Jambe de force à ressort selon la revendication 7, **caractérisée en ce que** les évidements (10) sont limités par une courbe de pénétration (11), qui est adaptée à l'enveloppe (12) du tube extérieur (4).

9. Jambe de force à ressort selon revendication 7 ou 8, **caractérisée en ce que** la douille (7) est reliée, au moins par sections, au tube extérieur (4), le long du bord d'au moins l'un des évidements (10).

10. Jambe de force à ressort selon la revendication 9, **caractérisée en ce que** la liaison est une liaison par soudure, brasage ou collage ou une liaison enfichable ou une liaison par serrage.
